# EUROPEAN PATENT APPLICATION

(11) **EP 1 316 957 A1**
(43) Date of publication of application: **04.06.2003**
(21) Application number: 01403065.4
(22) Date of filing: 29.11.2001
(51) Int. Cl.: G11B 27/034, G11B 27/036, G11B 27/36, H04H 7/00

(54) **Method and system for inserting an audio signal into a digital audio/video stream**

(71) Applicant: Thomson Licensing S.A., 92100 Boulogne Billancourt (FR)
(72) Inventor: Tan, Chee Lam, Singapore 730520 (SG); Lee, Kok Joo, Singapore 538542 (SG); Dumont, Frank, Singapore 269564 (SG)
(74) Representative: Bonnans, Arnaud

(57) **Abstract**

A method and system for digitally combining audio with video stream, said method comprising the steps of: reading a video-audio digital stream from a medium; receiving an audio signal from a microphone; converting the receiver microphone audio signal into an audio digital stream; combining the video-audio digital stream and the audio digital stream to form a mixed digital stream; and recording the mixed digital stream into a medium. The analog audio signals are routed to a TV, with no or minimum digital processing, so that no echo occurs.

## Description

The present invention generally relates to a digital technology for processing audio and video signals, and particularly relates to mixing audio signals with video signals in digital domain.

So far, there are technologies for mixing analog audio signals with analog video signals. However, there is not any technology for adding audio signal to audio-video signal in digital domain.

An object of the invention is to provide a method and a system for digitally combining audio with video stream, so as to add narration on an existing video stream read from a medium, for instance DV camera, hard disc or optical disc.

A further object of the invention is to refrain the echo when adding narration in real-time to existing audio-video stream.

According to a first aspect of the invention, the present invention provides a method for digitally combining audio with video stream, characterized in that, comprising the steps of: reading a video-audio digital stream from a medium; receiving an audio signal from a microphone; converting the received microphone audio signal into an audio digital stream; combining the video-audio digital stream and the audio digital stream to form a mixed digital stream; and recording the mixed digital stream into a medium. Said method further comprises a step of: by-passing the audio signals to a TV, with no or minimum digital processing.

According to a second aspect of the invention, the present invention further provides a a system for digitally combining audio with video stream, comprising: a player for playing-back a video-audio digital stream from a medium; a microphone for receiving an audio signal; an ADC(analog-to-digital converter) for converting the received audio signal into an audio digital stream; an mixer for combining the video digital stream and the audio digital stream to form a mixed digital stream; and a recorder for recording the mixed digital stream into a medium.

The foregoing and other objects, aspects and advantages will be better understood from the following detailed description of preferred embodiments of the invention with reference to the drawings, in which:
Fig. 1 illustrates a configuration for mixing microphone audio signal with audio-video stream read from a DV camera according to a first embodiment of the invention;
Fig. 2 illustrates another configuration for adding microphone audio signal into audio-video stream dubbed from a hard disc drive or optical disc drive according to a second embodiment of the invention.

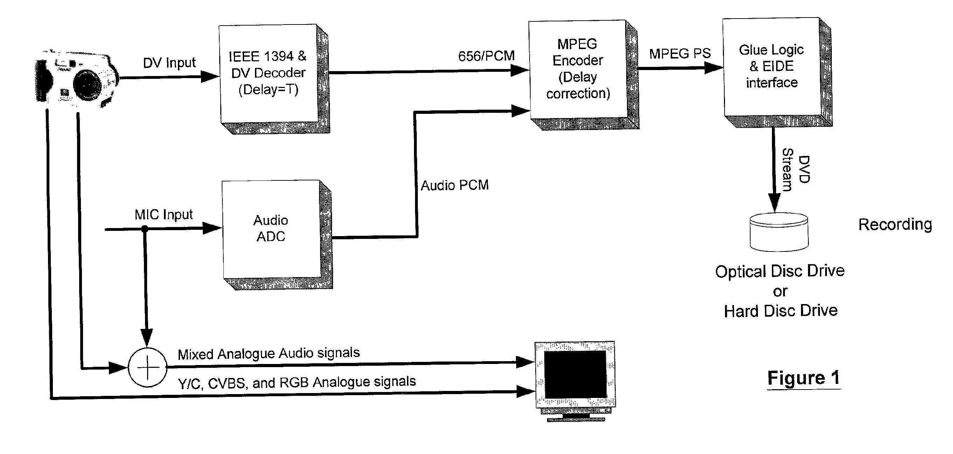

Fig. 1 illustrates a configuration for mixing microphone audio signal with audio-video stream read from a DV(digital video) camera according to the first embodiment of the invention. As shown in Fig. 1, DV signals are played-back from a DV camera and input to a DV decoder block, such as an IEEE 1394&DV decoder. Said DV decoder decodes the input DV signals to generate digital audio PCM (pulse code modulation) signals and digital video signals (656 for instance). Said generated digital audio signals and video signals are then provided to a first digital input of a MPEG encoder, for instance an integrated circuit available as NEC µPD61502.

In the system for mixing microphone audio signal with audio-video stream read from a DV (digital video) camera as shown in Fig. 1, a microphone (not shown) is used to receive sound of narration or speech of a user. The received MIC audio input from the microphone is processed by an audio ADC (analog-to-digital converter) block to convert the analog MIC audio signal to a digital one. The digitized MIC audio signal is provided to the MPEG encoder as a second PCM input of the MPEG encoder.

The audio PCM signal from the first PCM input of the MPEG (motion picture expert group) encoder, which is from the DV camera, and the audio PCM signal from the microphone are then mixed in the MPEG encoder to create a dual channel stereo audio. The created dual channel audio is further mixed with the digital video signal in the MPEG encoder for encoding a MPEG program stream. The MPEG program stream is then recorded on a medium, for instance a DVD (digital video disc or digital versatile disc) recordable disc via an IDE (integrated drive electronics) interface block, such as a glue logic & EIDE(enhanced integrated drive electronics) interface block. Alternatively, said medium can be a HDD.

During adding-in narration, due to the delay in the digital processing of video and audio, what the user says into the microphone would be echoed in the speaker a few moments later; to prevent this, a by-pass is provided in the system in the Fig. 1 to directly output the unprocessed analog video and audio from the DV camera to a TV set. This means that the user must also connect the analog audio and video of the DV camera to the DVD recorder for by-passing direct to the TV, although the recording is, in fact, done in the digital domain as described in the above with reference to Fig. 1.

As shown in Fig. 1, Y/C, CVBS and RGB analog signals are output from the DV camera directly to the TV set. An analog mixer is provided to receive analog audio signals from both the DV camera and the microphone input audio, which are mixed therein to form mixed analog audio signals. The mixed analog audio signals are then input directly to the TV set. Since the analog audio signal from the microphone is not subjected to digital processing, there is no delay. So there is no echo in the TV speaker for the user's narration.

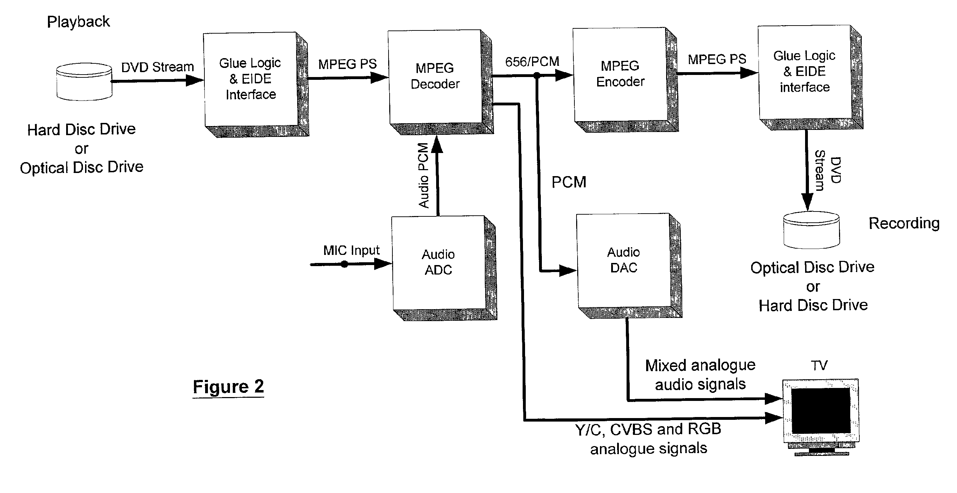

Fig. 2 illustrates another configuration for adding microphone audio signal into audio-video stream reproduced from a hard disc drive or optical disc drive according to the second embodiment of the invention. In this embodiment, the audio-video stream is recorded previously in a hard disk or an optical disc. When the recording is available on a hard disc, the recording is played-back from the hard disc and the audio narration is added from a microphone in real-time. As shown in Fig. 2, the played-back stream is input to a first IDE interface block, such as a glue logic & EIDE interface block, to generate played-back MPEG program stream. The MPEG program stream is input to a MPEG decoder.

In Fig.2, a microphone (not shown) is used to receive sound of narration or speech of the user. The received MIC audio input from the microphone is processed by an audio ADC (analog-to-digital converter) block to convert the analog MIC audio signal to a digital one. The digitized MIC audio PCM signal is provided to another input of the MPEG decoder. The audio signal from the MPEG program stream and the MIC audio PCM are combined together in the MPEG decoder to obtain a new packed audio PCM.

At this time, since the video and audio data are to be re-written to an optical disc, the addition of another audio source to the existing audio data is much easier and in fact could be accomplished by one such IC called Sti5508. The IC Sti5508 includes the MPEG decoder shown in the Fig.2, and also includes an integrated video encoder. Therefore, the function of the Sti5508 is to convert the MPEG stream into video and audio digital streams. The integrated video encoder is to convert the video signal stream from the MPEG stream into analog signals, such as Y/C, CVBS and RGB signals, which will be described later.

As illustrated in the Fig. 2, the resulting mixed PCM (audio digital stream) and 656 video digital stream from the MPEG decoder are routed to a MPEG encoder to generate a new MPEG program stream ; this same PCM is also input to a DAC (digital-to-analogue converter) block to generate an analog mixed audio signals to a TV. The new MPEG program stream is then sent to a second IDE interface, such as a second glue logic & EIDE interface block, for recording on a medium. Said medium may be either an optical disc drive of a DVD recorder or the hard disk drive where the initial recording is stored itself, as shown in Fig. 2.

As shown in Fig. 2, both of the Y/C, CVBS and RGB signals from the integrated video encoder in the IC Sti5508, and the mixed analog audio signals from the audio DAC are sent to the TV set. In this way, there is only minimum digital processing, so there will be no echo of the microphone (as the main delay happens on the MPEG encoder).

The second embodiment also provides for another option, that is , the first recording could be done on an optical disc instead. This optical disc is then played-back, and the audio narration is added via the microphone in real time. The new MPEG DVD program stream is similarly re-generated, and this time, they are downloaded into the hard disc. When the user is satisfied with the added audio narration, the complete recording on the hard disc can then be transferred to a DVD recordable disc. The signal flow diagram is the same as shown that in figure 2, but the source is the optical disc and the destination is the hard disc.

By means of the above described embodiments of the method and system for digitally combining audio with video stream, audio signals can be mixed with audio-video signals in digital domain, and also the echo can be avoided effectively.

Having described and illustrated the principles of the invention in the preferred embodiments thereof, it should be apparent that the invention can be modified in arrangement and detail, without departing from the spirit and scope of the invention.

Additionally, it can be noted that the 1394 DV-decoder has also a processing time, T. Hence, the microphone PCM will be similarly delayed by the same time, T, so that the narration match the video content. The delay can be done by the MPEG encoder firmware automatically when the DV-mixing is selected.

## Claims

1. A method for digitally combining audio with video stream, **characterized in that**, comprising the steps of:
reading a video-audio digital stream from a medium;
receiving an audio signal from a microphone ;
converting the received microphone audio signal into an audio digital stream ;
combining the video-audio digital stream and the audio digital stream to form a mixed digital stream ; and
recording the mixed digital stream into a medium.

2. The method according to the claim 1, further comprising a step of: by-passing the audio signals to a TV, with no or minimum digital processing.

3. The method according to the claim 2, wherein said medium is a DV camera, and said by-passing step comprises mixing analog audio signal from the DV camera with the received microphone analog audio signal to form a mixed analog audio signal, and routing said mixed analog audio signal and Y/C, CVBS and RGB analog signals from the DV camera to the TV.

4. The method according to the claim 2, wherein said medium is one of hard disc and optical disc, and said by-passing step comprises mixing the digital audio stream read from said one of hard disc and optical disc with the digitized microphone audio signal to form a mixed digital audio stream, digital-to-analog converting the mixed digital audio stream to a mixed analog audio signals, extracting Y/C, CVBS and RGB analog signals from the digital video-audio stream, and routing said mixed analog audio signal and the extracted Y/C, CVBS and RGB analog signals to the TV.

5. The method according to the claim 4, wherein said recording step comprises recording said mixed digital stream in a hard disk,and when the user is satisfied with the added audio narration,transferring the complete recording on the hard disc to a DVD recordable disc.

6. A system for digitally combining audio with video stream, **characterized in that**, comprising:
a player for playing-back a video-audio digital stream from a medium ;
a microphone for receiving an audio signal;
an ADC (analog-to-digital converter) for converting the received audio signal into an audio digital stream ;
a mixer for combining the video digital stream and the audio digital stream to form a mixed digital stream ; and
a recorder for recording the mixed digital stream into a medium.

7. The system according to the claim 6, wherein said medium is a DV camera, and said system further comprises a mixer for mixing analog audio signal from the DV camera with the received microphone analog audio signal to form a mixed analog audio signal, and said mixed analog audio signal and Y/C, CVBS and RGB analog signals from the DV camera are routed to a TV.

8. The system according to the claim 6, wherein said medium is one of hard disc and optical disc, and said video-audio stream is MPEG stream, wherein said mixer is a MPEG decoder for converting the MPEG stream to video and audio digital streams and combining the microphone audio digital stream with said audio digital stream and video digital stream to form a mixed digital PCM stream; and said system further comprises a MPEG encoder for converting the mixed digital PCM stream and the digital video stream into MPEG program stream for recording.

9. The system according to the claim 8, further comprising:
a DAC for converting the mixed digital audio stream from the mixed digital PCM stream into mixed analog audio signals;
a video encoder for converting the MPEG stream into Y/C, CVBS and RGB analog signals; and
wherein said mixed analog audio signal and the Y/C, CVBS and RGB analog signals are routed to a TV.

10. The system according to the claim 9 or 10, wherein said recorder records said mixed digital stream in a hard disk, and when the user is satisfied with the added audio narration, transfers the complete recording on the hard disc to a DVD recordable disc.
